# EUROPEAN PATENT SPECIFICATION

(11) **EP 1 588 617 B1**
(45) Date of publication and mention of the grant of the patent: **06.08.2014**
(21) Application number: 05075955.4
(22) Date of filing: 19.04.2005
(51) Int. Cl.: A01N 25/30, A01N 59/08, A01P 3/00, A01P 1/00

(54) **Disinfectant composition**
Desinfektionszusammensetzung
Composition désinfectante

(30) Priority: 21.04.2004 JP 2004126161; 24.11.2004 JP 2004338823; 18.04.2005 JP 2005119772
(43) Date of publication of application: 26.10.2005
(73) Proprietor: Shin-Etsu Chemical Co., Ltd., Chiyoda-ku, Tokyo 100-0004 (JP)
(72) Inventor: Nakanishi, Tetsuo, c/o Shin-Etsu Chemical Co., Ltd, Gunma 379-0224 (JP); Yamamoto, Akira, c/o Shin-Etsu Chemical Co., Ltd., Gunma 379-0224 (JP)
(74) Representative: Jansen, Cornelis Marinus

(56) References cited:
- EP-A- 1 053 678
- DATABASE WPI Section Ch, Week 200254 Derwent Publications Ltd., London, GB; Class C03, AN 2002-503500 XP002340023 & JP 2002 104908 A (ASAHI KAGAKU KENKYUSHO) 10 April 2002 (2002-04-10)
- DATABASE WPI Section Ch, Week 199906 Derwent Publications Ltd., London, GB; Class D15, AN 1999-064004 XP002340024 & JP 10 309582 A (KINOSUI KENKYUSHO KK) 24 November 1998 (1998-11-24)

## Description

### Technical Field

The present invention relates to a disinfectant composition, specifically to a disinfectant composition comprising slightly acidic electrolyzed water and a specific polyether-modified silicone. The composition has excellent disinfecting efficacy and a long shelf life.

### Background of the Invention

It is known that electrolyzed water containing hypochlorous acid as an active ingredient, which is prepared by electrolyzing an aqueous solution of an alkali metal chloride such as sodium chloride and potassium chloride, is used as an agricultural disinfectant as described in Japanese Patent Laid-Open No. 01-180293. The acidic electrolyzed water has disinfecting efficacy on various kinds of bacteria such as Escherichia *coli* and *Staphylococcus aureus*, and is environmentally clean. For this reason, it has attracted much interest and many studies on application thereof are under way in the pharmaceutical industry and the food industry, as described in Japanese Patent Laid-Open Nos.07-118158, 08-252310, and 2000-233161.

There are two kinds of acidic electrolyzed water used in the food industry, i.e., strongly acidic electrolyzed water and slightly acidic electrolyzed water. The strongly acidic electrolyzed water is prepared by electrolyzing an aqueous solution of sodium chloride at a concentration of 0.2% or lower in an electrolytic cell provided with a diaphragm between a cathodic side and an anodic side. The strongly acidic electrolyzed water is found in the anodic side. This has a pH of 2.7 or lower, an available chlorine content of from 20 to 60 mg/kg, and an oxidation-reduction potential of 1000 mV or higher. It is known that this contains much free hypochlorous acid responsible for disinfection and shows a disinfecting efficacy in a short period of time for the relatively low available chlorine content.

Meanwhile, the slightly acidic electrolyzed water is prepared by electrolyzing an aqueous dilute solution of hydrochloric acid at a concentration of from 2 to 6 % in an electrolytic cell without a diaphragm. This has a pH of from 5 to 6.5 and an available chlorine content of from 10 to 60 mg/kg. It is known that this contains much free hypochlorous acid to show an excellent disinfecting efficacy.

Applications of the acidic electrolyzed water have been studied for sterilizing agricultural plants. For example, Japanese Patent Application Laid-Open No.07-187931 describes that powdery mildew and downy mildew are controlled by spraying a strongly acidic electrolyzed water having a pH of about 2.7 on plants for several times. However, such a strongly acidic water may cause physiological disorder in the plants and splaying conditions such as timing and weather should be carefully chosen. Another drawback of the strongly acidic electrolyzed water is that its efficacy diminishes faster and varies larger than conventional disinfectants having longstanding efficacy, because the active ingredient, i.e., hypochlorous acid, is decomposed by light or air when sprayed to the atmosphere.

To improve wettability of the acidic electrolyzed water to plant surface by decreasing a surface tension thereof, a conventional surfactant such as polyoxyethylene alkylphenyl ether was added, but the disinfecting efficacy was hardly improved. This is probably because the acidic electrolyzed water has so high a dynamic surface tension that it cannot reach target bacteria evenly and surely, or fast enough for hypochlorous acid to remain undecomposed.

Meanwhile, Japanese Patent Application Laid-Open Nos. 02-73002, 2000-327787, and U.S.Patent No. 5,104,647 specification disclose polyether-modified silicones having trisiloxane main chain which silicones decrease surface tension of an aqueous solution of agricultural chemicals to thereby improve spreadability of the solution larger than conventional surfactants do. None of these literatures mention the aforesaid slightly acidic electrolyzed water.

Further, the abstract of Japanese Patent Application Laid-Open No. 2002-104908 describes a process for producing an agricultural disinfectant, comprising electrolytic water containing hypochlorous acid. The abstract of Japanese Patent Application Laid-Open No. 10-309582 describes the production of electrolyzed water, wherein the electrolyzed water further comprises an inorganic buffer solution. None of these literatures mention the aforesaid polyether-modified silicones.

### Summary of the Invention

The purpose of the present invention is to provide a disinfectant composition which has a lower surface tension to thereby have improved disinfecting efficacy and can maintain the lower surface tension for a prolonged period of time.

After intensive studies, the present inventors have found that the above purpose is attained by a specific polyether-modified silicone. Thus, the present invention is a disinfectant composition comprising a slightly acidic electrolyzed water has a pH of from 4.0 to 6.5 and an available chlorine content of from 10 to 60 mg/kg, and 0.001 to 1.0 wt%, relative to a total weight of the composition, of at least one polyether-modified silicones represented by the following formula (4) 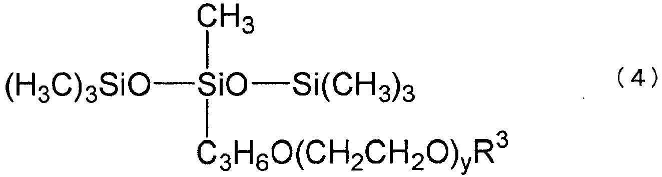 wherein R³ is a hydrogen atom, a hydrocarbon group having 1 to 30 carbon atoms or an organic group represented by the formula, R⁴-(CO)-, wherein R⁴ is a hydrocarbon group having 1 to 10 carbon atoms, and, is an integer of from 5 to 15

The above composition of the present invention has a significantly lower surface tension than the slightly acidic electrolyzed water and thus larger disinfecting efficacy. Further, the composition has a prolonged shelf life.

### Detailed Description of the Invention

The electrolyzed water used in the present invention is slightly acidic electrolyzed water which is known as an acidic electrolyzed water authorized as a food additive. The slightly acidic electrolyzed water can be prepared by electrolyzing an aqueous dilute solution of hydrochloric acid at a concentration of from 2 to 6% in an electrolysis cell without a diaphragm. Alternatively, it can be prepared by preparing a strongly acidic electrolyzed water and a strongly alkaline electrolyzed water each from a sodium chloride solution and then mixing them with a ratio of the former to the latter of from 6 : 4 to 5.5 : 4.5. It may also be prepared by electrolyzing a dilute hydrochloric acid solution in an instrument used for preparing hypochlorous acid-containing electrolyzed water sold under the trade name, B.Colon, ex Miura Denshi Co. The slightly acidic electrolyzed water has a pH ranging from 4.0 to 6.5, preferably from 5.0 to 6.5. In the pH range, an available chlorine content ranges from 10 to 60 mg/kg and high disinfecting efficacy can be obtained. In addition, it has a longer shelf life in contrast to the strongly acidic electrolyzed water which decomposes readily to loose the activity. At a pH lower than the aforesaid lower limit, the polyether-modified silicone used in the present invention may decompose. On the other hand, at a pH higher than the aforesaid upper limit, an available chlorine content is lower than 10 mg/kg, resulting in lower disinfecting efficacy.

Known polyether-modified silicones are represented by the following formulae (1) and (2). 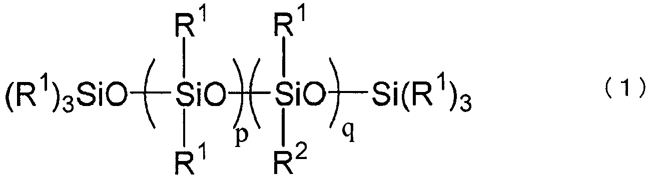 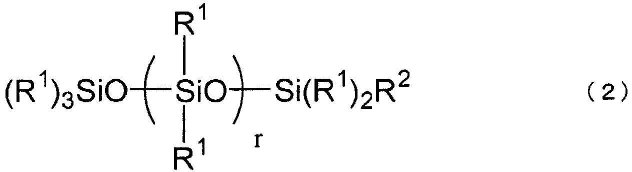 wherein R¹, which can be the same or different, is selected from the group consisting of alkyl groups, aryl groups, aralkyl groups and fluorinated alkyl groups each having 1 to 30 carbon atoms.

Examples of R¹ include alkyl groups such as methyl, ethyl, propyl, butyl, pentyl, hexyl, heptyl, octyl, nonyl, and decyl groups; alicyclic groups such as cyclopentyl and cyclohexyl groups; aryl groups such as phenyl and tolyl groups; aralkyl groups such as benzyl and phenethyl groups; and fluorinated alkyl groups such as trifluoropropyl and heptadecafluorodecyl groups. Preferably, R¹ is a group having 1 to 6 carbon atoms such as methyl, ethyl, propyl, butyl, or phenyl group. More preferably, 80 % or more of R¹ is a methyl group.

R² is a polyoxyalkylene group represented by the following formula (3),

-CₓH₂ₓ-O-(C₂H₄O)_{y}(C₃H₆O)_{z}-R³ (3)

wherein R³ is a hydrogen atom, a hydrocarbon group having 1 to 30 carbon atoms or an organic group represented by the formula, R⁴-(CO)-, wherein R⁴ is a hydrocarbon group having 1 to 10 carbon atoms. R³ may be a hydrogen atom, methyl, ethyl, propyl, butyl, or acetyl group. Preferably, R³ is a hydrogen atom or a methyl group. X is an integer of from 2 to 5 and y is an integer of from 5 to 15, preferably from 7 to 12. The propylene oxide residue is useful to improve a handling property of the polyether-modified silicone at a low temperature and z is an integer of from 0 to 10. When the polyalkylene moiety consists of ethylene oxide residues and propylene oxide residues, these resiudes may be present blockwise or randomly.

In the formula (1), p is an integer of from 0 to 3 and q is an integer of 1 or 2. In the formula (2), r is an integer of from 0 to 6, preferably from 0 to 3.

The polyether-modified silicone presented by the following formula (4) is used in the present invention, 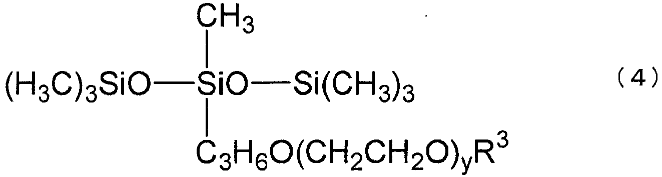 wherein R³ and y are as defined above. This silicone is commercially available under trade names, for example, KF-643, ex Shin-Etsu Chemical Co., and Silwet L-77, ex General Electric Co.

The known polyether-modified silicone represented by the formulae (1) and (2) may be prepared by subjecting an orgnohydrogenpolysiloxane and a polyoxyalkylene compound to an addition reacion.

Examples of the starting organohydrogenpolysiloxanes for the silicone (1) include M₂D^{H} , M₂DD^{H}, M₂D₂D^{H}, M₂D₃D^{H}, M₂DD^{H}₂, M₂D₂D^{H}₂ and M₂D₃D^{H}₂, wherein M represents (H₃C) ₃SiO_{1/2} group, D represents (H₃C) ₂SiO group; M^{H} and D^{H} represent M and D with one of the methyl groups being replaced with a hydrogen atom, respectively; and M^{R} and D^{R} represents those replaced with a substituent R. The aforesaid silicones may be used alone or in an equilibrium mixture. Preferred are those for q = 0 or 1 in the formula (1), i.e., M₂D^{H}, M₂DD^{H}, M₂D₂D^{H} and M₂D₃D^{H}, among which the trisiloxane, M₂D^{H}, is particularly preferred.

Examples of the starting organohydrogenpolysiloxanes for the silicone (2) include MM^{H}, MDM^{H}, MD₃M^{H}, and M^{n-Bu}D_{4.5}M^{H}. MDM^{H} may be provided in an equilibrium mixture and M^{n-Bu}D_{4.5}M^{H} may be a mixture of M^{n-Bu}D₃M^{H} and M^{n-Bu}D₆ M^{H}. Preferred are MM^{H} and MD₃M^{H}, among which MD₃M^{H} is particularly preferred.

The polyoxyalkylene compound to be reacted with the aforesaid orgnohydrogenpolysiloxane is represented by the following formula (5),

CₓH₂ₓ₋₁-O-(C₂H₄O)_{y} (C₃H₆O)_{z}-R³ (5)

wherein x, y, z and R³ are as defied above in the formula (3).

The polyoxyalkylene compound is reacted with the organohydrogenpolysiloxane in such an amount that a molar ratio of the terminal unsaturated group of the polyoxyalkylene to SiH group of the organohydrogenpolysiloxane, Vi/SiH, is in a range of from 0.8 to 1.5, preferably from 0.9 to 1.2.

The above addition reaction is preferably performed in the presence of a platinum catalyst or a rhodium catalyst. Preferred examples of the catalyst include chloroplatinic acid, chloroplatinic acid modified with alcohol, and a complex of chloroplatinic acid with a vinyl siloxane. A cocatalyst may be used, for example, sodium acetate and sodium citrate.

The catalyst may be used in a catalytically effective amount, but preferably in an amount of 50 ppm or less, particularly 20 ppm or less calculated as platinum or rhodium. The aforesaid addition reaction may be performed as necessary in an organic solvent. Examples of the organic solvent include aliphatic alcohols such as methanol, ethanol, 2-propanol, and butanol; aromatic hydrocarbons such as toluene and xylene; aliphatic or alicyclic hydrocarbons such as n-pentane, n-hexane, and cyclohexane; and halogenated hydrocarbons such as dichloromethane, chloroform, and carbon tetrachloride. Reaction conditions are not limited to particular ones, but, preferably, performed under reflux for 1 to 10 hours.

The present composition comprises the polyether-modified silicone in an amount of from 0.001 to 1 wt%, preferably from 0.05 to 0.2 wt% relative to a total weight of the composition. The polyether-modified silicone significantly lowers dynamic surface tension of the slightly acidic electrolyzed water, enabling the electrolyzed water to wet and rapidly spread on surface of leaves as soon as it is sprayed on the leaves. The electrolyzed water may penetrate through stomata, resulting in further increased disinfecting efficacy. After disinfecting the plant, the active ingredient, i.e., hypochlorous acid, decomposes and does not remain on the plant and therefore is environmentally clean.

The present composition may comprise other components in such an amount that not to adversely affect the composition. Examples of the components include agricultural chemicals other than disinfectant and a defoaming agent such as a silicone defoaming agent comprising a silicone oil and silica.

### Examples

The present invention will be explained in detail below with reference to the Examples, but not limited thereto. In the Examples, surface tension, oxidation-reduction potential, and pH were measured at 25 degrees C.

### Reference Example 1, Example 2 and Comparative Example 2

The polyether-modified silicones represented by the following formulae were used.

The polyether-modified silicones represented by the following formulae were used.

### Polyether-modified silicone No.1:

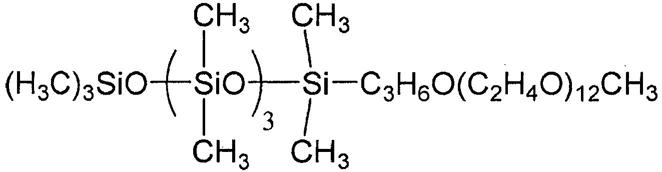

### Polyether-modified silicone No.2:

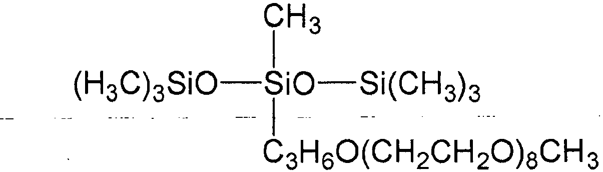

The compositions of Reference Example 1 and Example 2 were prepared by mixing 0.1 mass% of the polyether-modified silicone No.1 and 2, respectively, with a slightly acidic electrolyzed water having a pH of 6. The electrolyzed water was prepared by electrolysis in an electrolytic cell without a diaphragm. The compositions thus obtained were subjected to measurements of pH, oxidation-reduction potential, and surface tension. The results are as seen in Table 1. In Table 1, Comparative Example 2 is blank electrolyzed water.

### Comparative Example 1

The composition of Comparative Example 1 was prepared in the same manner as in Reference Example 1 except that 0.1 wt% of sodium dodecyl sulfate was used in place of the polyether-modified silicone No.1.

### Referential Example 1

The composition of Referential Example 1 was prepared in the same manner as in Reference Example 1 except that the polyether-modified silicone No. 3 represented by the following formula was used in place of the polyether-modified silicone No.1.

(CH₃)₃SiO[(CH₃)₂SiO]₄[R(CH₃)SiO]₂Si (CH₃)₃

wherein R is a polyether group represented by the formula, CH₂CH₂CH₂O(C₂H₄O)₉H.

**Table 1**

| | Days elapse | 0 | 1 | 4 | 5 | 6 | 7 |
|---|---|---|---|---|---|---|---|
| Reference Example 1 | pH | 6.19 | 6.13 | 5.81 | 5.68 | 5.44 | 5.49 |
| | Oxidation-reduction potential ,mV | 839 | 829 | 812 | 791 | 775 | 798 |
| | Surface tension, mN/m | 24.5 | 23.5 | 24.0 | 24.3 | 24.0 | 23.5 |
| Example 2 | pH | 6.33 | 6.19 | 6.49 | 6.38 | 6.46 | 6.35 |
| | Oxidation-reduction potential ,mV | 838 | 832 | 828 | 792 | 783 | 822 |
| | Surface tension, mN/m | 21.4 | 20.9 | 21.0 | 21.1 | 21.2 | 21.1 |
| Referential Example 1 | pH | 6.18 | 6.30 | 6.25 | 6.36 | 6.40 | 6.32 |
| | Oxidation-reduction potential ,mV | 838 | 827 | 830 | 815 | 822 | 840 |
| | Surface tension, mN/m | 27.1 | 27.4 | 27.3 | 28 | 27.6 | 27.4 |
| Comparative Example 1 | pH | 6.04 | 6.14 | 6.29 | 6.22 | 6.28 | 6.27 |
| | Oxidation-reduction potential ,mV | 835 | 822 | 831 | 840 | 815 | 808 |
| | Surface tension, mN/m | 43.4 | 43.0 | 44.0 | 44.2 | 45.0 | 44.8 |
| Comparative Example 2 (blank slightly acidic elecrolytzed water) | pH | 6.00 | 6.18 | 6.46 | 6.30 | 6.36 | 6.28 |
| | Oxidation-reduction potential ,mV | 878 | 877 | 878 | 868 | 856 | 870 |
| | Surface tension, mN/m | 58.6 | 61.2 | 65.3 | 64.3 | 71.2 | 68.3 |

As shown in Table 1, the present compositions had significantly lower surface tension than Comparative Examples 1 and 2. The surface tension, pH and oxidation-reduction potential of the compositions were stable for at least 1 week. This result indicates that the polyether-modified silicones in the present invention, namely the polyether-modified silicone No.2, is effective spreading agent for the slightly acidic electrolyzed water.

### Referential Examples 2&3 and Comparative Example 3

The compositions of Referential Examples 2 and 3 were prepared in the same manner as in Reference Example 1 except that a strongly acidic electrolyzed water having pH of 2.7 was used in place of the slightly acidic electrolyzed water. The compositions were subjected to measurements of pH, oxidation-reduction potential, and surface tension. The results are as seen in Table 2 in which Comparative Example 3 is blank strongly acidic electrolyzed water.

**Table 2**

| | Days elapsed | 0 | 1 | 4 | 5 | 6 | 7 |
|---|---|---|---|---|---|---|---|
| Referential Example 2 | pH | 2.65 | 2.54 | 2.58 | 2.79 | 2.60 | 2.65 |
| | Oxidation-reduction potential ,mV | 1091 | 1031 | 785 | 785 | 670 | 635 |
| | Surface tension, mN/m | 24.1 | 26.0 | 26.9 | 28.2 | 28.1 | 29.8 |
| Referential Example 3 | pH | 2.58 | 2.51 | 2.72 | 2.61 | 2.77 | 2.78 |
| | Oxidation-reduction potential ,mV | 1092 | 871 | 723 | 630 | 631 | 607 |
| | Surface tension, mN/m | 22.0 | 39.0 | 51.1 | 59.9 | 60.1 | 57.7 |
| Comparative Example 3 (blank strongly acidic electrolyzed water) | pH | 2.72 | 2.69 | 2.64 | 2.62 | 2.58 | 2.57 |
| | Oxidation-reduction potential ,mV | 1129 | 1130 | 1120 | 1122 | 1125 | 1111 |
| | Surface tension, mN/m | 68.2 | 69.3 | 67.0 | 70.0 | 71.1 | 70.2 |

As shown in Table 2, the polyether-modified silicone No. 1 was stable even in the strongly acidic electrolyzed water.

### Test of efficacy of controlling tomato powdery mildew

The compositions seen in the following Table 3 were tested for efficacy of controlling powdery mildew on tomato. The test was performed on tomatoes, "Momotaro", ex Takii Seed Company, which were planted in October 2003 in a greenhouse and naturally infected by powdery mildew. A total plant area of 800 m² was divided in 6 sections including 1 section without control. Each composition seen in Table 3 was sprayed on tomatoes in a section in an amount of 10 liters/100 m² on January 22, January 29, and February 5, 2004, 3 times in total. On February 13, 2004, all of the tomato leaves were examined to determine incidence of the powdery mildew. They were also visually observed for damage by the compositions.

**Table 3**

| | Surfactant | pH | Incidence of powdery mildew, % | Damage |
|---|---|---|---|---|
| Example 2 | Silicone No.2 | 6.0-6.4 | 2 | No |
| Comparative Example 1 | Sodium dodecyl sulfate | 6.0-6.4 | 22 | No |
| Comparative Example 2 | None | 6.0-6.4 | 38 | No |
| Referential Example 1 | Silicone No.3 | 6.0-6.4 | 20 | No |
| Referential Example 3 | Silicone No.2 | 2.5-2.8 | 18 | Yes |
| Uncontrolled | - | - | 72 | No |

As shown in Table 3, the present composition of Example 2 had a significantly higher efficacy of controlling powdery mildew on tomato because of the improved spreadability by the polyether-modified silicone No.2. There was no damage by the composition of Example 2.

The composition of Referential Example 3 caused damage due to strong acidity thereof.

## Claims

1. A disinfectant composition comprising a slightly acidic electrolyzed water, wherein the slightly acidic electrolyzed water has a pH of from 4.0 to 6.5 and an available chlorine content of from 10 to 60 mg/kg, and 0.001 to 1.0 wt%, relative to a total weight of the composition, of at least one polyether-modified silicone represented by the following formula (4) 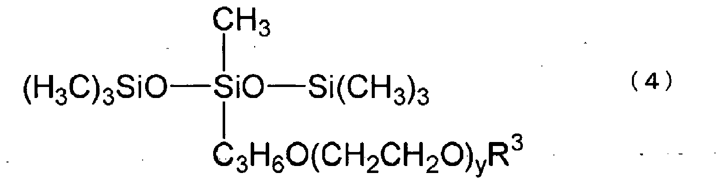 wherein R³ is a hydrogen atom, a hydrocarbon group having 1 to 30 carbon atoms or an organic group represented by the formula, R⁴-(CO)-, wherein R⁴ is a hydrocarbon group having 1 to 10 carbon atoms, and,
y is an integer of from 5 to 15.

2. The disinfectant composition according to claim 1, wherein R³ is a hydrogen atom or a methyl group.

3. A method of disinfecting agricultural plants comprising the step of spraying the disinfectant composition according to any one of the claims 1 to 2.

## Patentansprüche

1. Desinfektionszusammensetzung, umfassend ein leicht saures, elektrolysiertes Wasser, wobei das leicht saure, elektrolysierte Wasser einen pH-Wert von 4,0 bis 6,5 und einen verfügbaren Chlorgehalt von 10 bis 60 mg/kg und 0,001 bis 1,0 Gew.-% aufweist, bezogen auf ein Gesamtgewicht der Zusammensetzung von mindestens einem Polyether-modifizierten Silikon, dargestellt durch folgende Formel (4) 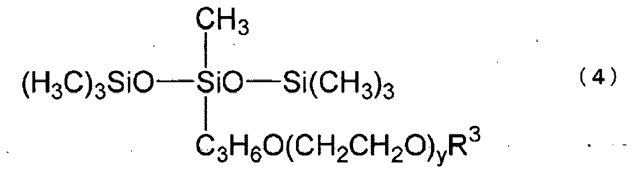 wobei R³ ein Wasserstoffatom, eine Kohlenwasserstoffgruppe mit 1 bis 30 Kohlenstoffatomen oder eine organische Gruppe ist, dargestellt durch die Formel R⁴-(CO)-, wobei R⁴ eine Kohlenwasserstoffgruppe mit 1 bis 10 Kohlenstoffatomen ist und y eine Ganzzahl von 5 bis 15.

2. Desinfektionszusammensetzung nach Anspruch 1, wobei R³ ein Wasserstoffatom oder eine Methylgruppe ist.

3. Verfahren zum Desinfizieren von Agrarpflanzen, umfassend den Schritt, bei dem die Desinfektionszusammensetzung nach einem der Ansprüche 1 bis 2 versprüht wird.

## Revendications

1. Composition désinfectante comprenant une eau électrolysée légèrement acide, où l'eau électrolysée légèrement acide a un pH de 4,0 à 6,5 et une teneur en chlore disponible de 10 à 60 mg/kg, et 0,001 à 1,0 % en poids, par rapport à un poids total de la composition, d'au moins un silicone modifié par polyéther représenté par la formule (4) suivante 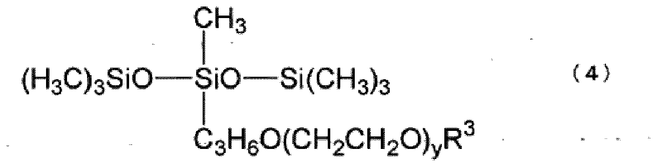 où R³ est un atome d'hydrogène, un groupe hydrocarboné ayant 1 à 30 atomes de carbone ou un groupe organique représenté par la formule R⁴-(CO)-, où R⁴ est un groupe hydrocarboné ayant 1 à 10 atomes de carbone, et,
y est un entier de 5 à 15.

2. Composition désinfectante selon la revendication 1, où R³ est un atome d'hydrogène ou un groupe méthyle.

3. Procédé de désinfection de plantes agricoles comprenant l'étape de pulvérisation de la composition désinfectante selon l'une quelconque des revendications 1 à 2.
